(19) Europäisches Patentamt
European Patent Office
Office européen des brevets

(11) EP 4 644 489 A1

(12) **EUROPEAN PATENT APPLICATION**
published in accordance with Art. 153(4) EPC

(43) Date of publication:
**05.11.2025 Bulletin 2025/45**

(21) Application number: **23912094.2**

(22) Date of filing: **26.12.2023**

(51) International Patent Classification (IPC):
***C08L 101/14*** *(2006.01)* ***C08K 5/3447*** *(2006.01)*
***C08K 5/5399*** *(2006.01)* ***H01B 7/288*** *(2006.01)*

(52) Cooperative Patent Classification (CPC):
**C08K 5/3447; C08K 5/5399; C08L 101/14; H01B 7/288**

(86) International application number:
**PCT/JP2023/046537**

(87) International publication number:
**WO 2024/143315 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.12.2022 JP 2022208814**

(71) Applicant: **Sumitomo Seika Chemicals Co., Ltd.**
**Kako-gun, Hyogo 675-0145 (JP)**

(72) Inventor: **TAKAHASHI, Kazu**
**Himeji-shi, Hyogo 672-8076 (JP)**

(74) Representative: **Vossius & Partner**
**Patentanwälte Rechtsanwälte mbB**
**Siebertstrasse 3**
**81675 München (DE)**

(54) **WATER-ABSORBING RESIN COMPOSITION, WATER-STOPPING MATERIAL, AND CABLE**

(57) Provided are a water-absorbent resin composition having excellent heat resistance, and a water-blocking material and a cable each comprising the water-absorbent resin composition. The water-absorbent resin composition of the present invention comprises water-absorbent resin particles and a benzimidazole compound represented by the following formula (1):

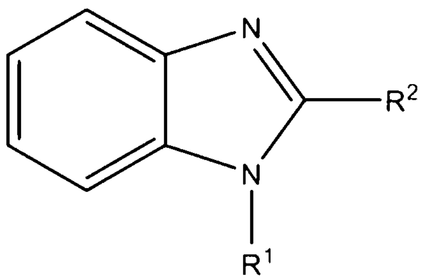

(1)

(wherein in formula (1), $R^1$ represents a methyl group or a hydrogen atom, and $R^2$ represents a methyl group, an amino group, a methylthio group, a phenyl group, or a hydrogen atom).

EP 4 644 489 A1

## Description

Technical Field

The present invention relates to a water-absorbent resin composition, a water-blocking material, and a cable.

Background Art

Water-absorbent resins have excellent water absorption ability and can exert a water-blocking effect. Therefore, water-absorbent resins are known to find various applications in which water-blocking properties are required. For example, water-absorbent resins are used as water-blocking materials for communication cables such as optical cables, and power cables.

For example, Patent Literature (PTL) 1 discloses a water-blocking material in which a water-absorbent sheet including a water-absorbent resin is enclosed in an external material, and discloses a technique for preventing a gel of the water-absorbent resin swollen by water absorption from seeping out.

Citation List

Patent Literature

PTL 1: JP2014-147281A

Summary of Invention

Technical Problem

However, when used as water-blocking materials for cables etc., conventional water-absorbent resins are easily affected by heat generated by the cables. The heat generated by the cables deteriorates water-absorbent resins that have turned into a gel by water absorption, and due to this problem, maintaining the desired water-blocking ability is difficult. From such a viewpoint, there is a strong demand for establishing a technique for improving the heat resistance of water-absorbent resins; in particular, there is an urgent need to improve the heat resistance of water-absorbent resins for use as water-blocking materials for various cables etc.

The present invention has been made in view of the above circumstances. An object of the present invention is to provide a water-absorbent resin composition having excellent heat resistance, and a water-blocking material and a cable each comprising the water-absorbent resin composition.

Solution to Problem

The present inventors conducted extensive research to achieve the above object and found that the above object can be achieved by combining a specific benzimidazole compound with water-absorbent resin particles. The present invention has been accomplished based on this finding.

Specifically, the present invention encompasses, for example, the subject matter described in the following items.

Item 1

A water-absorbent resin composition comprising:

water-absorbent resin particles; and
a benzimidazole compound represented by the following formula (1):

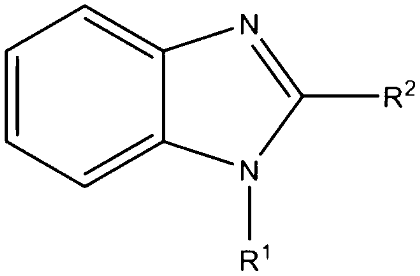

(1)

wherein in formula (1), $R^1$ represents a methyl group or a hydrogen atom, and $R^2$ represents a methyl group, an amino group, a methylthio group, a phenyl group, or a hydrogen atom.

Item 2

The water-absorbent resin composition according to Item 1, comprising a metal chelating agent.

Item 3

The water-absorbent resin composition according to Item 1 or 2, wherein the content of the benzimidazole compound is 0.01 parts by mass or more and 5 parts by mass or less per 100 parts by mass of the water-absorbent resin particles.

Item 4

The water-absorbent resin composition according to Item 2, wherein the content of the metal chelating agent is 0.001 parts by mass or more and 2 parts by mass or less per 100 parts by mass of the water-absorbent resin particles.

Item 5

The water-absorbent resin composition according to any one of Items 1 to 4, having a 30-second swelling height of 6.0 mm or more.

Item 6

A water-blocking material comprising the water-absorbent resin composition of any one of Items 1 to 5.

Item 7

A cable comprising the water-blocking material of Item 6.

Advantageous Effects of Invention

The water-absorbent resin composition of the present invention has excellent heat resistance.

Brief Description of Drawings

Fig. 1 is a schematic view of a measurement apparatus used for measuring the swelling height of a water-absorbent resin composition.

Description of Embodiments

Embodiments of the present invention are described in detail below. In the present specification, the terms "comprising" and "containing" include the concepts of "comprising," "containing," "consisting essentially of," and "consisting of."
In the numerical range described in stages in the present specification, the upper or lower limit of the numerical range at one stage can be optionally combined with the upper or lower limit of the numerical range at another stage. In the numerical range described in the present specification, the upper or lower limit of the numerical range may be replaced with

a value shown in the Examples or a value that can be uniquely derived from the Examples. Further, in the present specification, the numerical values connected by "to" mean the numerical range including the numerical values before and after "to" as the lower limit and the upper limit.

1. Water-absorbent Resin Composition

The water-absorbent resin composition of the present invention comprises water-absorbent resin particles and a benzimidazole compound represented by the following formula (1).

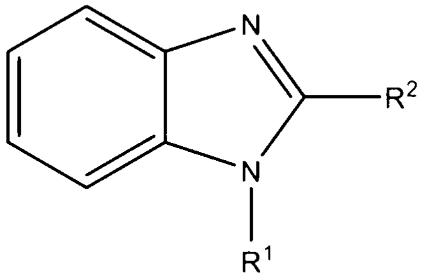

(1)

In formula (1), $R^1$ represents a methyl group or a hydrogen atom, and $R^2$ represents a methyl group, an amino group, a methylthio group, a phenyl group, or a hydrogen atom.

The water-absorbent resin composition of the present invention comprises water-absorbent resin particles and a benzimidazole compound represented by formula (1) above, and thus has excellent heat resistance. Specifically, even when the water-absorbent resin composition of the present invention is placed in a high-temperature environment in a swollen gel state, the viscosity of the gel does not easily decrease; more specifically, deterioration of the gel is unlikely to occur even in a high-temperature environment. Therefore, the water-absorbent resin composition of the present invention can be suitably used as various water-blocking materials, and is particularly suitable as water-blocking materials for cables.

In the present invention, whether the heat resistance is excellent can be determined from the values of the gel viscosity A after 4 days in an environment of 90$\pm$2°C and the gel viscosity retention S, which are described below. In particular, it can be determined that the larger both of these values are, the more excellent the heat resistance of the water-absorbent resin composition is.

Benzimidazole Compound

The water-absorbent resin composition of the present invention comprises a benzimidazole compound represented by formula (1). For this reason, the water-absorbent resin composition of the present invention can have excellent heat resistance.

Examples of the benzimidazole compound represented by formula (1) include benzimidazole, 2-aminobenzimidazole, 1-methylbenzimidazole, 2-methylbenzimidazole, 2-amino-1-methylbenzimidazole, 2-phenylbenzimidazole, 2-(methylthio)benzimidazole, and the like.

The water-absorbent resin composition may comprise only one type of the benzimidazole compound represented by formula (1) or may comprise two or more different types thereof.

The benzimidazole compound represented by formula (1) can be obtained by a known production method or can be obtained from a commercially available product etc.

Water-absorbent Resin Particles

The water-absorbent resin particles contained in the water-absorbent resin composition of the present invention are a component for exhibiting water-blocking ability and are a material that can be a main component of the water-absorbent resin composition.

The water-absorbent resin particles for use may be selected from a wide variety of known water-absorbent resin particles. Among these, the water-absorbent resin particles preferably comprise a structure in which a polymer of a water-soluble ethylenically unsaturated monomer is crosslinked. In this case, the water-absorbent resin composition can have excellent heat resistance. The polymer of a water-soluble ethylenically unsaturated monomer may, for example, be crosslinked with an internal-crosslinking agent described later; or can be crosslinked with a post-crosslinking agent described later in place of the internal-crosslinking agent or in addition to the internal-crosslinking agent.

The water-soluble ethylenically unsaturated monomer for use is, for example, selected from a wide range of

known monomers usable in typical water-absorbent resins. Examples of the water-soluble ethylenically unsaturated monomer include (meth)acrylic acid (in the present specification, "acrylic" and "methacrylic" are together referred to as "(meth)acrylic"; the same applies below) and salts thereof; 2-(meth)acrylamide-2-methylpropanesulfonic acid and salts thereof; nonionic monomers, such as (meth)acrylamide, N,N-dimethyl (meth)acrylamide, 2-hydroxyethyl (meth)acrylate, N-methylol (meth)acrylamide, and polyethylene glycol mono(meth)acrylate; amino group-containing unsaturated monomers, such as N,N-diethylaminoethyl (meth)acrylate, N,N-diethylaminopropyl (meth)acrylate, and diethylaminopropyl (meth)acrylamide, and quaternized products thereof; and the like. These water-soluble ethylenically unsaturated monomers may be used singly, or (copolymerized) in a combination of two or more. In particular, from the standpoint of convenience in industrial availability, (meth)acrylic acid and salts thereof, (meth)acrylamide, and N,N-dimethyl acrylamide are preferable; and (meth)acrylic acid and salts thereof are more preferable.

When acrylic acid or a salt thereof is used as such a water-soluble ethylenically unsaturated monomer, the acrylic acid or a salt thereof is used as the main water-soluble ethylenically unsaturated monomer. Specifically, the amount of the acrylic acid or a salt thereof is preferably 70 to 100 mol%, based on the total number of moles of the water-soluble ethylenically unsaturated monomers used.

When the water-soluble ethylenically unsaturated monomer described above is subjected to the reversed-phase suspension polymerization described later, the monomer may be used in the form of an aqueous solution, in order to increase the dispersion efficiency in a hydrocarbon dispersion medium. The concentration of the monomer in such an aqueous solution is typically 20 mass% or more and the saturated concentration or less, preferably 25 to 90 mass%, and more preferably 30 to 85 mass%.

When the water-soluble ethylenically unsaturated monomer has an acid group, like (meth)acrylic acid or 2-(meth)acrylamide-2-methylpropanesulfonic acid, the acid group of the water-soluble ethylenically unsaturated monomer for use may be neutralized with an alkaline neutralizer beforehand, as necessary. Examples of such alkaline neutralizers include alkali metal salts, such as sodium hydroxide, sodium carbonate, sodium hydrogen carbonate, potassium hydroxide, and potassium carbonate; ammonia; and the like. In particular, these alkaline neutralizers may be used in the form of an aqueous solution in order to simplify the neutralization operation. These alkaline neutralizers may be used singly or in a combination of two or more.

In order to increase the water-absorption capacity by increasing the osmotic pressure of the resulting water-absorbent resin, the degree of neutralization of the water-soluble ethylenically unsaturated monomer with an alkaline neutralizer is typically preferably 10 to 100 mol%, and more preferably 30 to 80 mol%, of all acid groups in the water-soluble ethylenically unsaturated monomer.

The water-absorbent resin particles can be produced, for example, by a production method comprising performing a polymerization reaction using a raw material containing the water-soluble ethylenically unsaturated monomer (hereinafter, referred to as "the polymerization step").

Examples of the polymerization reaction performed in the polymerization step include reversed-phase suspension polymerization, aqueous solution polymerization, emulsion polymerization, and the like. From the standpoint of easily adjusting the 30-second swelling height, which is described below, to a predetermined range, reversed-phase suspension polymerization is preferably used in the polymerization step. The reversed-phase suspension polymerization refers to, for example, a method in which a poorly soluble monomer with respect to a dispersion medium is suspended in the dispersion medium in the presence of a dispersion stabilizer, and polymerized. The reversed-phase suspension polymerization may be multistage polymerization, in which a monomer is polymerized in multiple stages, as is known. For example, the reversed-phase suspension polymerization may be two-stage polymerization. In the multistage polymerization, the first polymerization reaction is referred to as the first stage, and the monomers added in stages after the first polymerization are referred to as the monomer in the second stage, the monomer in the third stage, and so on.

The dispersion medium for use in reversed-phase suspension polymerization can be, for example, a hydrocarbon dispersion medium. Examples of hydrocarbon dispersion mediums include aliphatic hydrocarbons, such as n-hexane, n-heptane, n-octane, and ligroin; alicyclic hydrocarbons, such as cyclopentane, methyl cyclopentane, cyclohexane, and methyl cyclohexane; aromatic hydrocarbons, such as benzene, toluene, and xylene; and the like. Of these dispersion mediums, n-hexane, n-heptane, and cyclohexane are preferably used from the standpoint of ease of industrial availability, quality stability, and low price. These dispersion mediums may be used singly, or in a combination of two or more. Examples of usable dispersion mediums include Exxsol Heptane (produced by Exxon Mobil Corporation: heptane and isomeric hydrocarbons) and Nappar 6 (produced by Exxon Mobil Corporation: cyclohexane and isomeric hydrocarbons), which are known as combined solvents; and the like.

Examples of the water-soluble ethylenically unsaturated monomer usable in reversed-phase suspension polymerization are the same as those of the water-soluble ethylenically unsaturated monomer described above. From the standpoint of excellent reactivity, (meth)acrylic acid and salts thereof, (meth)acrylamide, and N,N-dimethyl acrylamide are preferable, and (meth)acrylic acid and salts thereof are more preferable. In addition, the water-soluble ethylenically unsaturated monomer may be neutralized so that the degree of neutralization falls within the range described above.

In the polymerization reaction in the polymerization step, in particular, in the reversed-phase suspension

polymerization, a thickening agent can be used as needed. Examples of the thickening agent include hydroxyethyl cellulose, hydroxypropyl cellulose, methyl cellulose, carboxymethyl cellulose, polyacrylic acid, (partially) neutralized polyacrylic acid, polyethylene glycol, polyacrylamide, polyethyleneimine, dextrin, sodium alginate, polyvinyl alcohol, polyvinyl pyrrolidone, polyethylene oxide, and the like.

The dispersion stabilizer for use in the reversed-phase suspension polymerization may be a surfactant. Examples include sucrose fatty acid esters, polyglycerol fatty acid esters, sorbitan fatty acid esters, polyoxyethylene sorbitan fatty acid esters, polyoxyethylene glycerol fatty acid esters, sorbitol fatty acid esters, polyoxyethylene sorbitol fatty acid esters, polyoxyethylene alkyl ethers, polyoxyethylene alkyl phenyl ethers, polyoxyethylene castor oil, polyoxyethylene hydrogenated castor oil, alkylallyl formaldehyde condensed polyoxyethylene ethers, polyoxyethylene polyoxypropylene block copolymers, polyoxyethylene polyoxypropyl alkyl ethers, polyethylene glycol fatty acid esters, alkyl glucoside, N-alkyl gluconamide, polyoxyethylene fatty acid amide, polyoxyethylene alkylamine, phosphoric esters of polyoxyethylene alkyl ethers, phosphoric esters of polyoxyethylene alkyl allyl ethers, and the like. Among these, sorbitan fatty acid esters, polyglycerol fatty acid esters, sucrose fatty acid esters, and the like are preferable from the standpoint of monomer dispersion stability. These surfactants may be used singly, or in a combination of two or more.

In order to keep the water-soluble ethylenically unsaturated monomer well dispersed in a hydrocarbon dispersion medium and achieve a dispersion effect that is commensurate with the amount of the surfactant used, the amount of the surfactant used is preferably 0.1 to 30 parts by mass, and more preferably 0.3 to 20 parts by mass, per 100 parts by mass of the water-soluble ethylenically unsaturated monomer in the first stage.

As the dispersion stabilizer, a polymeric dispersant may also be used in combination with or in place of the surfactant. Examples of usable polymeric dispersants include maleic anhydride-modified polyethylene, maleic anhydride-modified polypropylene, maleic anhydride-modified ethylene-propylene copolymers, maleic anhydride-modified EPDM (ethylene-propylene-diene terpolymer), maleic anhydride-modified polybutadiene, maleic anhydride-ethylene copolymers, maleic anhydride-propylene copolymers, maleic anhydride-ethylene-propylene copolymers, maleic anhydride-butadiene copolymers, polyethylene, polypropylene, ethylene-propylene copolymers, oxidized polyethylene, oxidized polypropylene, oxidized ethylene-propylene copolymers, ethylene-acrylic acid copolymers, ethyl cellulose, ethyl hydroxyethyl cellulose, and the like. Among these, maleic anhydride-modified polyethylene, maleic anhydride-modified polypropylene, maleic anhydride-modified ethylene-propylene copolymers, maleic anhydride-ethylene copolymers, maleic anhydride-propylene copolymers, maleic anhydride-ethylene-propylene copolymers, polyethylene, polypropylene, ethylene-propylene copolymers, oxidized polyethylene, oxidized polypropylene, oxidized ethylene-propylene copolymers, and the like are preferable from the standpoint of monomer dispersion stability. These polymeric dispersants may be used singly, or in a combination of two or more.

In order to keep the water-soluble ethylenically unsaturated monomer well dispersed in a hydrocarbon dispersion medium and achieve a dispersion effect that is commensurate with the amount of the polymeric dispersant used, the amount of the polymeric dispersant for use is preferably 0.1 to 30 parts by mass, and more preferably 0.3 to 20 parts by mass, per 100 parts by mass of the water-soluble ethylenically unsaturated monomer in the first stage.

In the polymerization step, for example, a wide range of known polymerization initiators can be used. Examples of radical polymerization initiators include persulfates, such as potassium persulfate, ammonium persulfate, and sodium persulfate; peroxides, such as methyl ethyl ketone peroxide, methyl isobutyl ketone peroxide, di-t-butylperoxide, t-butyl cumylperoxide, and hydrogen peroxide; azo compounds, such as 2,2'-azobis(2-methylpropionamidine)dihydrochloride, 2,2'-azobis[2-(N-phenylamidino)propane]dihydrochloride, 2,2'-azobis[2-(N-allylamidino)propane]dihydrochloride, and 4,4'-azobis(4-cyanovaleric acid); and the like. The radical polymerization initiators can also be combined with one or more reducing agents, such as sodium sulfite, sodium hydrogen sulfite, ferrous sulfate, and L-ascorbic acid, to use them as redox polymerization initiators.

The lower limit of the amount of the radical polymerization initiator for use in the polymerization step is preferably 0.01 mmol, and more preferably 0.05 mmol, per mole of the water-soluble ethylenically unsaturated monomer used, from the standpoint of polymerization stability. The upper limit of the amount of the radical polymerization initiator for use is preferably 20 mmol, and more preferably 10 mmol, per mole of the water-soluble ethylenically unsaturated monomer used, from the standpoint of polymerization stability. The use of the radical polymerization initiator in an amount within this numerical range makes it easier to produce the water-absorbent resin.

A chain transfer agent may optionally be used in the polymerization step, if necessary. Examples of the chain transfer agent include hypophosphites, thiols, thiolic acids, secondary alcohols, amines, and the like.

An internal-crosslinking agent may be used as necessary in the polymerization step. This allows the polymer obtained in the polymerization step to have a structure in which the inside of the polymer is crosslinked with an internal-crosslinking agent. Thus, when the water-absorbent resin particles has a crosslinked structure inside of the polymer, this internal-crosslinked structure is formed when the water-soluble ethylenically unsaturated monomer is polymerized. In the present specification, the crosslinking agent for use in crosslinking the inside of the polymer is referred to as an "internal-crosslinking agent," in order to distinguish it from the post-crosslinking agent.

Examples of the internal-crosslinking agent include compounds having two or more polymerizable unsaturated

groups. Specific examples of the internal-crosslinking agent include di or tri(meth)acrylic acid esters of polyols, such as (poly)ethylene glycol (in the present specification, for example, "polyethylene glycol" and "ethylene glycol" together are referred to as "(poly)ethylene glycol"; the same applies below), (poly)propylene glycol, trimethylolpropane, glycerol polyoxyethylene glycol, polyoxypropylene glycol, and (poly)glycerol; unsaturated polyesters obtained by reacting the polyols listed above with unsaturated acids, such as maleic acid and fumaric acid; bisacrylamides, such as N,N'-methylenebis(meth)acrylamide; di or tri(meth)acrylic acid esters obtained by reacting polyepoxide with (meth)acrylic acid; di(meth)acrylic acid carbamyl esters obtained by reacting polyisocyanate, such as tolylene diisocyanate and hexamethylene diisocyanate, with hydroxyethyl (meth)acrylate; allylated starch; allylated cellulose; diallyl phthalate; N,N',N"-triallyl isocyanurate; divinyl benzene; and the like.

Examples of the internal-crosslinking agent further include, in addition to the compounds having two or more polymerizable unsaturated groups, glycidyl group-containing compounds, such as (poly)ethylene glycol diglycidyl ether, (poly)propylene glycol diglycidyl ether, and (poly)glycerol diglycidyl ether; (poly)ethylene glycol, (poly)propylene glycol, (poly)glycerol, pentaerythritol, ethylene diamine, polyethyleneimine, glycidyl (meth)acrylate, and the like. These internal-crosslinking agents may be used in a combination of two or more. Among these, (poly)ethylene glycol diglycidyl ether, (poly)propylene glycol diglycidyl ether, (poly)glycerol diglycidyl ether, and N,N'-methylenebisacrylamide are preferable from the standpoint of excellent reactivity at low temperatures.

When an internal-crosslinking agent is used, the lower limit of the amount of the internal-crosslinking agent for use is preferably 0.0001 mmol, more preferably 0.0005 mmol, even more preferably 0.001 mmol, and particularly preferably 0.01 mmol, per mole of the water-soluble ethylenically unsaturated monomer used, from the standpoint of ease of producing the water-absorbent resin. The upper limit of the amount of the internal-crosslinking agent for use is preferably 5 mmol, more preferably 0.5 mmol, even more preferably 0.1 mmol, and particularly preferably 0.05 mmol, per mole of the water-soluble ethylenically unsaturated monomer used. The internal-crosslinking agents may be used singly, or in a combination of two or more.

The temperature for the polymerization reaction in the polymerization step can be suitably determined in accordance with, for example, the type and amount of radical polymerization initiator used. The temperature for the polymerization reaction can be, for example, 20 to 110°C, and preferably 40 to 90°C. The reaction time can be set, for example, within the range of 0.1 hours or more to 4 hours or less.

The polymerization step can be performed, for example, by adding an aqueous solution containing an optionally neutralized water-soluble ethylenically unsaturated monomer, a thickening agent, a radical polymerization initiator, and an internal-crosslinking agent to a dispersion medium in which a polymer dispersion stabilizer has been dissolved; and then adding a surfactant to form a suspension.

By the polymerization step, the water-soluble ethylenically unsaturated monomer is polymerized to form a polymer. For example, reversed-phase suspension polymerization provides a slurry in which the polymer formed of the water-soluble ethylenically unsaturated monomer is dispersed. When an internal-crosslinking agent is used, the polymer obtained in the polymerization step has a structure crosslinked with the internal-crosslinking agent.

In the polymerization step, when the multistage polymerization described above is performed, the first stage of reversed-phase suspension polymerization is performed by the method described above; and then the water-soluble ethylenically unsaturated monomer is added to and mixed with the reaction mixture obtained in the first stage of the polymerization step to perform the second and the subsequent stages of reversed-phase suspension polymerization in the same manner as in the first stage. In the reversed-phase suspension polymerization at the second stage or each of the subsequent stages after the second stage, the radical polymerization initiator and the optionally added internal-crosslinking agent, in addition to the water-soluble ethylenically unsaturated monomer, can be added in a molar ratio of each component to the water-soluble ethylenically unsaturated monomer within the numerical ranges described above, based on the amount of the water-soluble ethylenically unsaturated monomer added at the second stage or each of the subsequent stages after the second stage of reversed-phase suspension polymerization; and then reversed-phase suspension polymerization can be performed under the same conditions as those of the method described above.

When the reversed-phase suspension polymerization is performed in multiple stages, it is preferable to set the total amount of the polymerization initiator and the total amount of the optionally used internal-crosslinking agent, per mole of the water-soluble ethylenically unsaturated monomer used in reversed-phase suspension polymerization, so as to fall within the numerical ranges described above, from the standpoint of ease of producing the desired water-absorbent resin.

The method for producing the water-absorbent resin particles may also comprise a drying step of drying the polymer obtained by the polymerization step. The drying step is a step of removing water from the polymer obtained in the polymerization step or from the polymer crosslinked with an internal-crosslinking agent, by applying energy such as heat from outside to the polymer. For example, in the case of reversed-phase suspension polymerization, water, the hydrocarbon dispersion medium, and other components can be removed from the polymer by performing azeotropic distillation in the drying step, with the polymer (hydrogel) obtained in the polymerization step being dispersed in the hydrocarbon dispersion medium. The water content of the polymer or the polymer crosslinked with the internal-crosslinking agent can be adjusted by performing the drying step. The drying step may be performed concurrently with the post-crosslinking step described later.

The drying step may be performed under ordinary pressure or under reduced pressure, and may be performed in a gas stream such as nitrogen in order to increase drying efficiency. When the drying step is performed under ordinary pressure, the drying temperature is preferably 70 to 250°C, more preferably 80 to 180°C, even more preferably 80 to 140°C, and particularly preferably 90 to 130°C. Under reduced pressure, the drying temperature is preferably 40 to 160°C, and more preferably 50 to 120°C.

The polymer obtained in the polymerization step (including a polymer crosslinked with an internal-crosslinking agent) or the polymer obtained in the drying step (including a polymer crosslinked with an internal-crosslinking agent) may be treated with a post-crosslinking agent. This allows the polymer to have a structure in which the polymer is crosslinked with a post-crosslinking agent; thus, the water-absorbent resin has a high crosslinking density near the surface thereof. The step of treating the polymer with a post-crosslinking agent is referred to as the "post-crosslinking step." The treatment with a post-crosslinking agent can be performed, for example, in the dispersion medium described above.

The type of post-crosslinking agent can include, for example, a wide range of post-crosslinking agents usable in conventional water-absorbent resins. The post-crosslinking agent for use can be a compound having two or more reactive functional groups. Specific examples of the post-crosslinking agent include polyols, such as ethylene glycol, propylene glycol, 1,4-butanediol, trimethylolpropane, glycerol, polyoxyethylene glycol, polyoxypropylene glycol, and polyglycerol; polyglycidyl compounds, such as (poly)ethylene glycol diglycidyl ether, (poly)glycerol diglycidyl ether, (poly)glycerol triglycidyl ether, trimethylolpropane triglycidyl ether, (poly)propylene glycol polyglycidyl ether, and (poly)glycerol polyglycidyl ether; haloepoxy compounds, such as epichlorohydrin, epibromohydrin, and $\alpha$-methyl epichlorohydrin; isocyanate compounds, such as 2,4-tolylene diisocyanate and hexamethylene diisocyanate; oxetane compounds, such as 3-methyl-3-oxetane methanol, 3-ethyl-3-oxetane methanol, 3-butyl-3-oxetane methanol, 3-methyl-3-oxetane ethanol, 3-ethyl-3-oxetane ethanol, and 3-butyl-3-oxetane ethanol; oxazoline compounds, such as 1,2-ethylene bis oxazoline; carbonate compounds, such as ethylene carbonate; hydroxy alkyl amide compounds, such as bis[N,N-di($\beta$-hydroxyethyl)]adipamide; and the like. Of these, polyglycidyl compounds, such as (poly)ethylene glycol diglycidyl ether, (poly)ethylene glycol triglycidyl ether, (poly)glycerol diglycidyl ether, (poly)glycerol triglycidyl ether, (poly)propylene glycol polyglycidyl ether, and (poly)glycerol polyglycidyl ether are more preferable. The post-crosslinking agents may be used singly, or in a combination of two or more.

From the standpoint of ease of adjusting the 30-second swelling height, described below, within a predetermined range, the lower limit of the amount of the post-crosslinking agent for use is preferably 0.01 mmol, more preferably 0.05 mmol, and even more preferably 0.1 mmol, per mole of the water-soluble ethylenically unsaturated monomer that constitutes the polymer to be post-crosslinked. The upper limit of the amount of the post-crosslinking agent for use is preferably 10 mmol, more preferably 5 mmol, and even more preferably 2 mmol, per mole of the water-soluble ethylenically unsaturated monomer.

The reaction temperature (i.e., the temperature at which the polymer is treated with the post-crosslinking agent) in the post-crosslinking step is preferably 50 to 250°C, more preferably 60 to 180°C, and even more preferably 60 to 140°C. The reaction time of the post-crosslinking (i.e., the time for treating the polymer with the post-crosslinking agent at the reaction temperature) cannot be determined in general because it varies depending on the reaction temperature, the type and the amount of the post-crosslinking agent used, etc. The reaction time of the post-crosslinking is typically 1 to 300 minutes, and preferably 5 to 200 minutes.

In the present invention, the method may also comprise a step of adding the metal chelating agent described later before, during, or after the post-crosslinking step. This step is hereinafter referred to as the "chelating agent addition step." By the chelating agent addition step, a metal chelating agent is added during the production process for the water-absorbent resin particles; thus, the resulting water-absorbent resin particles can contain the metal chelating agent. For example, the chelating agent can be placed near the surface of the water-absorbent resin particles.

In the chelating agent addition step, for example, the polymer before post-crosslinking (i.e., before the post-crosslinking agent is added) can be mixed with the metal chelating agent, the polymer after post-crosslinking (i.e., the polymer after the post-crosslinking agent is added) can be mixed with the metal chelating agent, or a combination of these may be used. That is, in the method for producing the water-absorbent resin particles, the polymer before post-crosslinking may be mixed with the metal chelating agent and then subjected to post-crosslinking treatment; or after the polymer is subjected to post-crosslinking treatment, the metal chelating agent may be mixed with the resulting polymer. Alternatively, in the method for producing water-absorbent resin particles, a step of mixing the polymer before post-crosslinking with the metal chelating agent, then subjecting the polymer to post-crosslinking treatment, and further, mixing the polymer after post-crosslinking treatment with the metal chelating agent may be performed.

The metal chelating agent does not necessarily have to be added during the production of the water-absorbent resin particles, and as described later, the metal chelating agent can be mixed with the water-absorbent resin particles produced beforehand.

In the polymerization step or a step after the polymerization step in the method for producing water-absorbent resin particles, additives may be added according to the purpose in order to impart various properties to the resulting water-absorbent resin particles. Examples of additives include various additives conventionally added to water-absorbent resin particles, such as inorganic powders, surfactants, oxidants, reducing agents, radical chain inhibitors, antioxidants, antimicrobial agents, deodorants, and the like.

The water content of the water-absorbent resin particles may be, for example, 20.0 mass% or less, 15.0 mass% or less, or 10.0 mass% or less, based on the total mass of the water-absorbent resin particles. The water content based on the total mass of the water-absorbent resin particles is measured by the method described later in the Examples.

Metal Chelating Agent

The water-absorbent resin composition of the present invention may also comprise a metal chelating agent.

Examples of the metal chelating agent include phosphonic acid-based metal chelating agents, metal chelating agents having an aminocarboxylic acid moiety, and the like.

The phosphonic acid-based metal chelating agent is a metal salt that has at least two phosphonic acid moieties in the molecule. Examples of the phosphonic acid-based metal chelating agent include various phosphonic acid compounds, such as ethylenediamine tetra methylene phosphonic acid, diethylene triamine penta methylene phosphonic acid, nitrotris methylene phosphonic acid, 1-hydroxyethylidene-1,1-diphosphonic acid, and diethylenetriamine penta(methylenephosphonic acid), and salts thereof.

Examples of the metal chelating agents having an aminocarboxylic acid moiety include compounds having an aminocarboxylic acid moiety, such as ethylenediamine-N,N'-disuccinic acid, ethylene glycol bis(β-aminoethyl ether)-N,N,N,N-tetraacetic acid, 3-propanediamine-N,N,N',N'-tetraacetic acid, N-(2-hydroxyethyl)ethylenediamine-N,N',N'-triacetic acid, ethylenediaminetetraacetic acid, nitrilotriacetic acid, hydroxyethylenediaminetriacetic acid, diethylenetriaminepentaacetic acid, and dihydroxyethyl glycine, and salts thereof.

Examples of other metal chelating agents include citric acid, polyphosphoric acid, phytic acid, pyrocatechol, N,N'-bis[3-(3,5-di-tert-butyl-4-hydroxyphenyl)propionyl]hydrazine, p-trans-coumaric acid, 1,10-phenanthroline, and α-cyclodextrin.

Examples of metal chelating agents in the form of a salt include alkali metal salts, such as salts of sodium and potassium, and alkaline earth metal salts, such as salts of magnesium and calcium. All or part of the ligands of the metal chelating agent can form a salt.

The metal chelating agent is preferably at least one member selected from the group consisting of phosphonic acid-based metal chelating agents and metal chelating agents having an aminocarboxylic acid moiety. In this case, the water-absorbent resin composition is likely to have better heat resistance. The metal chelating agent having an aminocarboxylic acid moiety is particularly preferably an ethylenediamine-N,N'-disuccinic acid trisodium salt. The phosphonic acid-based metal chelating agent is particularly preferably an ethylenediamine tetra methylene phosphonic acid pentasodium salt or a diethylene triamine penta methylene phosphonic acid heptasodium salt.

The water-absorbent resin composition may comprise only one type of the metal chelating agent or may comprise two or more different types.

The metal chelating agent can be obtained by a known production method or can be obtained from a commercially available product etc.

Water-absorbent Resin Composition

In the water-absorbent resin composition of the present invention, the content of the benzimidazole compound (the compound represented by formula (1)) can be 0.1 parts by mass or more and 10 parts by mass or less per 100 parts by mass of the water-absorbent resin particles, from the standpoint of easily improving heat resistance. From the standpoint of more easily improving heat resistance, the content of the metal chelating agent per 100 parts by mass of the water-absorbent resin particles is preferably 0.5 parts by mass or more, more preferably 1 part by mass or more, even more preferably 1.5 parts by mass or more, and particularly preferably 2 parts by mass or more. Further, from the standpoint of more easily improving heat resistance, the content of the metal chelating agent per 100 parts by mass of the water-absorbent resin particles is preferably 15 parts by mass or less, more preferably 10 parts by mass or less, even more preferably 7 parts by mass or less, and particularly preferably 5 parts by mass or less.

The water-absorbent resin composition of the present invention can comprise the metal chelating agent, in addition to the water-absorbent resin particles and the benzimidazole compound. In this case, heat resistance is further improved. When the water-absorbent resin composition comprises the water-absorbent resin particles, the metal chelating agent, and the benzimidazole compound (the compound represented by formula (1)), the content of the metal chelating agent can be 0.001 parts by mass or more and 2 parts by mass or less per 100 parts by mass of the water-absorbent resin particles, from the standpoint of easily improving heat resistance. From the standpoint of more easily improving heat resistance, the content of the metal chelating agent per 100 parts by mass of the water-absorbent resin particles is preferably 0.05 parts by mass or more, more preferably 0.10 parts by mass or more, even more preferably 0.15

parts by mass or more, and particularly preferably 0.20 parts by mass or more. In addition, from the standpoint of easily suppressing a decrease in swelling height, the content of the metal chelating agent per 100 parts by mass of the water-absorbent resin particles is preferably 1.5 parts by mass or less, more preferably 1.0 parts by mass or less, even more preferably 0.80 parts by mass or less, and particularly preferably 0.60 parts by mass or less.

When the water-absorbent resin composition comprises the water-absorbent resin particles, the metal chelating agent, and the benzimidazole compound (the compound represented by formula (1)), the content of the benzimidazole compound can be 0.01 parts by mass or more and 2 parts by mass or less per 100 parts by mass of the water-absorbent resin particles, from the standpoint of easily improving heat resistance. From the standpoint of more easily improving heat resistance, the content of the benzimidazole compound per 100 parts by mass of the water-absorbent resin particles is preferably 0.05 parts by mass or more, more preferably 0.15 parts by mass or more, even more preferably 0.30 parts by mass or more, and particularly preferably 0.50 parts by mass or more. In addition, from the standpoint of easily suppressing a decrease in swelling height, the content of the benzimidazole compound per 100 parts by mass of the water-absorbent resin particles is preferably 1.8 parts by mass or less, more preferably 1.6 parts by mass or less, even more preferably 1.4 parts by mass or less, and particularly preferably 1.2 parts by mass or less.

The water-absorbent resin particles, which are the basis for the content of the metal chelating agent or the benzimidazole compound, can comprise a polymer of a water-soluble ethylenically unsaturated monomer, an initiator, a crosslinking agent, and water contained in the water-absorbent resin particles. The water-absorbent resin particles, which serve as the basis as stated above, may further comprise a thickening agent, a surfactant, a polymeric dispersant used in the polymerization step. The water-absorbent resin particles may also further comprise various additives added in the polymerization step or a step after the polymerization step. Examples of additives include inorganic powders, surfactants, oxidants, reducing agents, radical chain inhibitors, antioxidants, antimicrobial agents, deodorants, and the like.

The water-absorbent resin composition of the present invention may comprise other components, in addition to the water-absorbent resin particles, the metal chelating agent, and the benzimidazole compound, as long as the effects of present invention are not impaired.

When the water-absorbent resin composition of the present invention comprises other components, examples of such other components include silica. When the water-absorbent resin composition of the present invention contains silica, the content of the silica is, for example, 0.01 to 5 parts by mass, preferably 0.02 to 3 parts by mass, and more preferably 0.05 to 1 part by mass, per 100 parts by mass of the water-absorbent resin particles. The water-absorbent resin composition of the present invention may comprise a component other than silica as the other components, including, for example, various components contained in known water-blocking materials.

The water-absorbent resin composition of the present invention preferably comprises the water-absorbent resin particles, the metal chelating agent, and the benzimidazole compound in an amount of 50 mass% or more, more preferably 80 mass% or more, even more preferably 90 mass% or more, and particularly preferably 95 mass% or more. The water-absorbent resin composition of the present invention may consist of the water-absorbent resin particles, the benzimidazole compound, and silica, or may consist of the water-absorbent resin particles and the benzimidazole compound. Furthermore, the water-absorbent resin composition of the present invention may consist of the water-absorbent resin particles, the metal chelating agent, the benzimidazole compound, and silica, or may consist of the water-absorbent resin particles, the metal chelating agent, and the benzimidazole compound.

The water-absorbent resin composition of the present invention preferably has a 30-second swelling height of 6.0 mm or more. In this case, the water-absorbent resin composition of the present invention can have excellent swelling ability. The 30-second swelling height of the water-absorbent resin composition of the present invention can be measured according to the measurement method described in the Examples section. The 30-second swelling height of the water-absorbent resin composition can be adjusted by appropriately selecting the type of the water-absorbent resin particles and the median particle size, as well as the content of the metal chelating agent and the content of the benzimidazole compound.

The water-absorbent resin composition of the present invention preferably has a 30-second swelling height of 8.0 mm or more, more preferably 10.0 mm or more, and even more preferably 12.0 mm or more. The upper limit of the 30-second swelling height may be 26.0 mm or 18.0 mm.

The water-absorbent resin composition of the present invention has a median particle size of, for example, 10 to 500 $\mu$m. The water-absorbent resin composition of the present invention has a median particle size of, preferably 30 to 300 $\mu$m, more preferably 50 to 250 $\mu$m, and even more preferably 100 to 200 $\mu$m. The shape of the water-absorbent resin of the present invention may be any of a variety of shapes, such as spheres, powder, granules, ellipses, flakes, rods, and chunks.

The water-absorbent resin composition of the present invention has a gel viscosity after 4 days at 90$\pm$2°C of preferably 23,000 mPa·s or more. In this case, the water-absorbent resin composition can have better heat resistance. The water-absorbent resin composition of the present invention has a gel viscosity after 4 days at 90$\pm$2°C of more preferably 25,000 mPa·s or more, and more preferably 27,000 mPa·s or more. The gel viscosity of the water-absorbent resin composition after 4 days at 90$\pm$2°C can be measured according to the measurement method described in "Measurement of Gel Viscosity Retention" in the Examples.

The water-absorbent resin composition of the present invention preferably has a gel viscosity retention S of 30% or more. In this case, the water-absorbent resin composition can have better heat resistance. The water-absorbent resin composition of the present invention preferably has a gel viscosity retention S of 40% or more, more preferably 50% or more, even more preferably 57% or more, and particularly preferably 65% or more. The gel viscosity retention S of the water-absorbent resin composition of the present invention can be calculated according to the measurement method described in "Measurement of Gel Viscosity Retention" in the Examples.

The water-absorbent resin composition of the present invention can be prepared, for example, by mixing the water-absorbent resin particles and the benzimidazole compound, and optionally the metal chelating agent, at a predetermined ratio. In this case, the metal chelating agent and the benzimidazole compound can be mixed in a solid state, such as a powder, with the water-absorbent resin particles (so-called dry blend method), or the metal chelating agent and the benzimidazole compound in the form of a solution in which the metal chelating agent and the benzimidazole compound are dissolved in a solvent such as water can be mixed with the water-absorbent resin particles.

When the water-absorbent resin particles obtained through the chelating agent addition step described above are used, the water-absorbent resin particles may contain the metal chelating agent. When the water-absorbent resin particles containing the metal chelating agent are used, the water-absorbent resin particles containing the metal chelating agent can be mixed with the benzimidazole compound at a predetermined ratio to thus prepare the water-absorbent resin composition of the present invention. In this case as well, the benzimidazole compound can be mixed in a solid state, such as a powder, with the water-absorbent resin particles (so-called dry blend method), or the benzimidazole compound in the form of a solution in which the benzimidazole compound is dissolved in a solvent such as water can be mixed with the water-absorbent resin particles.

The water-absorbent resin composition of the present invention, which comprises the water-absorbent resin particles and the benzimidazole compound, has excellent heat resistance. Accordingly, the water-absorbent resin composition of the present invention is suitable for a wide variety of applications, such as industrial materials such as water-blocking materials and agents for preventing dew condensation; agricultural and horticultural materials such as water-retaining agents and soil conditioners; and hygienic materials such as disposable diapers and sanitary napkins. In particular, the water-absorbent resin of the present invention, which can maintain its water-blocking effect for a long period of time, is suitable for use in water-blocking materials.

## 2. Water-blocking Material and Cable

As long as the water-blocking material of the present invention comprises the water-absorbent resin composition of the present invention described above, the composition of the water-blocking material can have, for example, the same composition as that of a known water-blocking material. The water-blocking material can be formed of the water-absorbent resin composition alone. Alternatively, a mixture of the water-absorbent resin composition and rubber and/or thermoplastic resin, etc., can be formed into a water-blocking material. Examples of the water-blocking material include water-blocking tapes, water-blocking yarns, and the like.

The water-blocking tape can be obtained, for example, by retaining the water-absorbent resin composition in a liquid-permeable sheet. Alternatively, the water-blocking tape can be obtained by sandwiching the water-absorbent resin composition between two or more liquid-permeable sheets. Specifically, a water-blocking tape can be obtained by adhering the water-absorbent resin composition and a liquid-impermeable sheet together using an adhesive to form a sheet. Examples of usable liquid-permeable sheets include nonwoven fabrics, woven fabrics, films, and the like made of a synthetic resin such as polyolefin, polyester, polyamide, nylon, or acrylic.

The water-blocking yarn can be obtained, for example, by applying the water-absorbent resin composition of the present invention to a substrate or impregnating a substrate with the water-absorbent resin composition of the present invention. Examples of usable substrates include long synthetic fibers and plastic yarns (substrate yarns). Specific examples include long fibers and plastic yarns of synthetic resins such as polyolefin, polyester, polyamide, nylon, and acrylic.

In the production of the water-blocking yarn, the water-absorbent resin composition can be applied to a substrate, or a substrate can be impregnated with the water-absorbent resin composition, by, for example, applying a dispersion in which the water-absorbent resin composition is dispersed in an organic solvent to the substrate or impregnating the substrate with the dispersion, to thus adhere the water-absorbent resin composition to the substrate. When the adhesion of the water-absorbent resin composition to the substrate is weak, the adhesion can be improved by using an adhesive.

Examples of adhesives include rubber-based adhesives such as natural rubber, butyl rubber, and polyisoprene; styrene-based elastomer adhesives such as a styrene-isoprene block copolymer (SIS) and a styrene-butadiene block copolymer (SBS); ethylene-vinyl acetate copolymer (EVA) adhesives; ethylene-acrylic acid derivative copolymer-based adhesives such as an ethylene-ethyl acrylate copolymer (EEA); ethylene-acrylic acid copolymer (EAA) adhesives; polyamide-based adhesives such as copolymerized nylon; polyolefin-based adhesives such as polyethylene and polypropylene; polyester-based adhesives such as polyethylene terephthalate (PET) and copolymerized polyester;

and acrylic adhesives.

The water-blocking material of the present invention comprises the water-absorbent resin composition of the present invention and thus has excellent heat resistance. In particular, even if the water-blocking material absorbs water to form a gel and is then placed in a high-temperature environment, the gel is less likely to deteriorate, and the water-blocking ability is less likely to decrease.

The water-blocking material of the present invention can be used for various applications. For example, the water-blocking material can be used for various cables, for example, communication cables and power cables, such as optical cables. Specifically, the water-blocking material can be suitably used for power cables used underground and undersea. The water-blocking tape, water-blocking yarn, etc. described above are particularly suitable as water-blocking materials for power cables.

The optical cable can have, for example, the same composition as that of a known optical cable. Like a common optical cable, the optical cable may have a structure that includes an optical fiber unit in which multiple optical fiber cores are bundled, an optical fiber assembly in which multiple optical fiber units are assembled, and a coating layer provided around the outer periphery of the optical fiber unit assembly. In order to prevent water that has entered from the outside from running along the length direction of the cable, a water-blocking tape is provided between the optical fiber unit assembly and the coating layer. Moreover, a water-blocking tape may also be included in the optical fiber unit assembly.

The power cable can have, for example, the same composition as that of a known power cable. Like a common power cable, the power cable may have a structure in which an inner semiconducting layer, an insulating layer, an outer semiconducting layer, and a coating layer are sequentially provided around a central conductor. In order to prevent water that has entered from the outside from running along the length direction of the cable, a water-blocking tape is provided between the outer semiconducting layer and the coating layer. Further, a water-blocking tape may be disposed between the inner semiconducting layer and the insulating layer. Moreover, a water-blocking yarn may be included in the central conductor.

The features (properties, structures, functions, etc.) described in the embodiments of the present disclosure may be combined in any manner to specify the subject matter included in the present disclosure. That is, this disclosure includes all of the subject matter comprising any combination of the combinable features described herein.

## Examples

The following describes the present invention in more detail with reference to Examples. However, the present invention is not limited to the embodiments of these Examples. The water-absorbent resin particles obtained in the following Production Examples and the water-absorbent resin compositions obtained in the Examples and Comparative Examples were evaluated by the various test methods described later. Unless otherwise specified, measurement was performed at a temperature of 25±2°C and a humidity of 50±10%.

### Example 1

A 2 L round-bottom cylindrical separable flask with an inner diameter of 11 cm equipped with a reflux condenser, a dropping funnel, a nitrogen gas inlet tube, and stirring blades including two sets of four inclined paddle blades with a blade diameter of 5 cm as a stirrer was prepared. Into this flask, 292 g of n-heptane as a hydrocarbon dispersion medium was placed, and 0.782 g of a maleic anhydride-modified ethylene-propylene copolymer (Mitsui Chemicals, Inc., Hi-Wax 1105A) as a polymeric dispersant was added. The mixture was heated to 80°C with stirring to dissolve the dispersant and then cooled to 56°C. Meanwhile, 92.0 g (1.03 mol) of an 80.5 mass% aqueous acrylic acid solution as a water-soluble ethylenically unsaturated monomer was placed in a beaker with an inner volume of 300 mL, and while cooling with ice water, 102.8 g of a 30 mass% aqueous sodium hydroxide solution was added dropwise to prepare a 75 mol% neutralized product of acrylic acid. Further, 44.7 g of water, 0.0644 g (0.238 mmol) of potassium persulfate as a water-soluble radical polymerization agent, and 0.0102 g (0.059 mmol) of ethylene glycol diglycidyl ether as an internal-crosslinking agent were added and dissolved to prepare an aqueous solution in the first stage. The aqueous solution was added to the separable flask, followed by stirring for 10 minutes. Thereafter, a surfactant solution obtained by dissolving 0.782 g of sucrose stearate (HLB 3, Mitsubishi-Kagaku Foods Corporation, RYOTO Sugar Ester S-370) as a surfactant in 7.04 g of n-heptane by heating in a 20 mL vial was further added. After the inside of the system was sufficiently purged with nitrogen with stirring at a stirrer rotation speed of 450 rpm, the flask was immersed in a water bath at 70°C to raise the temperature, and polymerization was allowed to proceed for 60 minutes, thereby obtaining a polymerization slurry liquid in the first stage.

Meanwhile, 101.2 g (1.13 mol) of an 80.5 mass% aqueous acrylic acid solution as a water-soluble ethylenically unsaturated monomer was placed in a separate beaker with an inner volume of 500 mL, and while cooling with ice water, 113.1 g of a 30 mass% aqueous sodium hydroxide solution was added dropwise to prepare a 75 mol% neutralized product of acrylic acid. Further, 13.2 g of water, 0.081 g (0.300 mmol) of potassium persulfate as a water-soluble radical polymerization agent, and 0.0091 g (0.053 mmol) of ethylene glycol diglycidyl ether as an internal-crosslinking agent

were added and dissolved to prepare an aqueous solution in the second stage.

The inside of the system in the separable flask was cooled to 31°C while stirring at a stirrer rotation speed of 1000 rpm. Next, the aqueous solution in the second stage was added in its entirety to the polymerization slurry liquid in the first stage, and the inside of the system was purged with nitrogen for 30 minutes. The flask was then again immersed in a water bath at 70°C to raise the temperature, and a polymerization reaction was allowed to proceed for 60 minutes, thereby obtaining a slurry containing a hydrogel polymer. Thereafter, the flask was immersed in an oil bath at 125°C, and 243.2 g of water was removed from the system while refluxing n-heptane by azeotropic distillation of n-heptane and water. 7.15 g (0.821 mmol) of a 2 mass% aqueous ethylene glycol diglycidyl ether solution was then added as a post-crosslinking agent to the flask, and the flask was maintained at 83°C for 2 hours. Subsequently, n-heptane was evaporated by heating in an oil bath at 125°C to dry the product, and further, the product was passed through a sieve with a mesh size of 850 μm to obtain 196.5 g of water-absorbent resin particles (A1). After 0.1 parts by mass of amorphous silica (Oriental Silicas Corporation, Toxil NP-S) was mixed with 100 parts by mass of the water-absorbent resin particles (A1), 2.50 parts by mass of benzimidazole was mixed with 100 parts by mass the water-absorbent resin particles (A1), thereby obtaining a water-absorbent resin composition (A1). The water-absorbent resin composition (A1) had a median particle size of 177 μm. The water-absorbent resin composition (A1) had a median particle size of 172 μm. The water-absorbent resin composition (A1) had a 30-second swelling height of 7.9 mm.

Example 2

A water-absorbent resin composition (A2) was obtained in the same manner as in Example 1, except that in Example 1, 1.50 parts by mass of 2-aminobenzimidazole was added to 100 parts by mass of the water-absorbent resin particles instead of benzimidazole. The water-absorbent resin composition (A2) had a median particle size of 175 μm. The water-absorbent resin composition (A2) had a 30-second swelling height of 8.1 mm.

Example 3

A water-absorbent resin composition (A3) was obtained in the same manner as in Example 1, except that in Example 1, 3.00 parts by mass of 1-methylbenzimidazole was added to 100 parts by mass of the water-absorbent resin particles instead of benzimidazole. The water-absorbent resin composition (A3) had a median particle size of 180 μm. The water-absorbent resin composition (A3) had a 30-second swelling height of 8.4 mm.

Example 4

A water-absorbent resin composition (A4) was obtained in the same manner as in Example 1, except that in Example 1, 3.00 parts by mass of 2-phenylbenzimidazole was added to 100 parts by mass of the water-absorbent resin particles instead of benzimidazole. The water-absorbent resin composition (A4) had a median particle size of 177 μm. The water-absorbent resin composition (A3) had a 30-second swelling height of 8.2 mm.

Example 5

A water-absorbent resin composition (A5) was obtained in the same manner as in Example 1, except that in Example 1, 1.50 parts by mass of 2-(methylthio)benzimidazole was added to 100 parts by mass of the water-absorbent resin particles instead of benzimidazole. The water-absorbent resin composition (A5) had a median particle size of 181 μm. The water-absorbent resin composition (A3) had a 30-second swelling height of 8.0 mm.

Example 6

A 2 L round-bottom cylindrical separable flask with an inner diameter of 11 cm equipped with a reflux condenser, a dropping funnel, a nitrogen gas inlet tube, and stirring blades including two sets of four inclined paddle blades with a blade diameter of 5 cm as a stirrer was prepared. Into this flask, 292 g of n-heptane as a hydrocarbon dispersion medium was placed, and 0.782 g of a maleic anhydride-modified ethylene-propylene copolymer (Mitsui Chemicals, Inc., Hi-Wax 1105A) as a polymeric dispersant was added. The mixture was heated to 80°C with stirring to dissolve the dispersant and then cooled to 56°C. Meanwhile, 92.0 g (1.03 mol) of an 80.5 mass% aqueous acrylic acid solution as a water-soluble ethylenically unsaturated monomer was placed in a beaker with an inner volume of 300 mL, and while cooling with ice water, 102.8 g of a 30 mass% aqueous sodium hydroxide solution was added dropwise to prepare a 75 mol% neutralized product of acrylic acid. Further, 44.7 g of water, 0.0644 g (0.238 mmol) of potassium persulfate as a water-soluble radical polymerization agent, and 0.0102 g (0.059 mmol) of ethylene glycol diglycidyl ether as an internal-crosslinking agent were added and dissolved to prepare an aqueous solution in the first stage. The aqueous solution was added to the separable

flask, followed by stirring for 10 minutes. Thereafter, a surfactant solution obtained by dissolving 0.782 g of sucrose stearate (HLB 3, Mitsubishi-Kagaku Foods Corporation, RYOTO Sugar Ester S-370) as a surfactant in 7.04 g of n-heptane by heating in a 20 mL vial was further added. After the inside of the system was sufficiently purged with stirring at a stirrer rotation speed of 450 rpm, the flask was immersed in a water bath at 70°C to raise the temperature, and polymerization was allowed to proceed for 60 minutes, thereby obtaining a polymerization slurry liquid in the first stage.

Meanwhile, 101.2 g (1.13 mol) of an 80.5 mass% aqueous acrylic acid solution as a water-soluble ethylenically unsaturated monomer was placed in a separate beaker with an inner volume of 500 mL, and while cooling with ice water, 113.1 g of a 30 mass% aqueous sodium hydroxide solution was added dropwise to prepare a 75 mol% neutralized product of acrylic acid. Further, 13.2 g of water, 0.081 g (0.300 mmol) of potassium persulfate as a water-soluble radical polymerization agent, and 0.0091 g (0.053 mmol) of ethylene glycol diglycidyl ether as an internal-crosslinking agent were added and dissolved to prepare an aqueous solution in the second stage.

The inside of the system in the separable flask was cooled to 31°C while stirring at a stirrer rotation speed of 1000 rpm. Next, the aqueous solution in the second stage was added in its entirety to the polymerization slurry liquid in the first stage, and the inside of the system was purged with nitrogen for 30 minutes. The flask was then again immersed in a water bath at 70°C to raise the temperature, and a polymerization reaction was allowed to proceed for 60 minutes, thereby obtaining a slurry containing a hydrogel polymer. Thereafter, the flask was immersed in an oil bath at 125°C, and 246.7 g of water was removed from the system while refluxing n-heptane by azeotropic distillation of n-heptane and water. Then, 3.50 g of a 0.32 mass% ethylenediamine tetra methylene phosphonic acid (abbreviated below as "EDTMP·5Na") aqueous solution was added as a metal chelating agent. Next, 7.15 g (0.821 mmol) of a 2 mass% aqueous ethylene glycol diglycidyl ether solution was added as a post-crosslinking agent to the flask, and the flask was maintained at 83°C for 2 hours. Subsequently, n-heptane was evaporated by heating in an oil bath at 125°C to dry the product to obtain 200.9 g of water-absorbent resin particles. The water-absorbent resin particles were then passed through a sieve with a mesh size of 850 μm to obtain 195.5 g of water-absorbent resin particles (1). After 0.1 parts by mass of amorphous silica (Oriental Silicas Corporation, Toxil NP-S) was mixed with 100 parts by mass of the water-absorbent resin particles (1), 0.12 parts by mass of benzimidazole was mixed with 100 parts by mass of the water-absorbent resin particles (1), thereby obtaining a water-absorbent resin composition (1). The water-absorbent resin composition (1) had a median particle size of 177 μm. The water-absorbent resin composition (1) had a 30-second swelling height of 10.2 mm.

Example 7

A water-absorbent resin composition (2) (194.5 g) was obtained in the same manner as in Example 6, except that in Example 6, the amount of benzimidazole added to 100 parts by mass of the water-absorbent resin particles was changed to 0.24 parts by mass. The water-absorbent resin composition (2) had a median particle size of 172 μm. The water-absorbent resin composition (2) had a 30-second swelling height of 9.9 mm.

Example 8

A water-absorbent resin composition (3) (193.9 g) was obtained in the same manner as in Example 6, except that in Example 6, the amount of benzimidazole added to 100 parts by mass of the water-absorbent resin particles was changed to 1.10 parts by mass. The water-absorbent resin composition (3) had a median particle size of 175 μm. The water-absorbent resin composition (3) had a 30-second swelling height of 8.9 mm.

Example 9

A water-absorbent resin composition (4) (191.1 g) was obtained in the same manner as in Example 7, except that in Example 7, the amount of water removed from the system was changed to 246.8 g, the concentration of the EDTMP·5Na aqueous solution was changed to 32 mass%, and the amount of the 32 mass% EDTMP·5Na aqueous solution added was changed to 5.25 g. The water-absorbent resin composition (4) had a median particle size of 176 μm. The water-absorbent resin composition (4) had a 30-second swelling height of 9.0 mm.

Example 10

A water-absorbent resin composition (5) (193.6 g) was obtained in the same manner as in Example 9, except that in Example 9, the amount of water removed from the system was changed to 247.9 g, and the amount of the 32 mass% EDTMP·5Na aqueous solution added was changed to 7.00 g. The water-absorbent resin composition (5) had a median particle size of 170 μm. The water-absorbent resin composition (5) had a 30-second swelling height of 8.7 mm.

Example 11

A water-absorbent resin composition (6) (195.6 g) was obtained in the same manner as in Example 10, except that in Example 10, the amount of benzimidazole added was changed to 0.36 parts by mass per 100 parts by mass of the water-absorbent resin particles. The water-absorbent resin composition (6) had a median particle size of 169 μm. The water-absorbent resin composition (6) had a 30-second swelling height of 8.5 mm.

Example 12

A water-absorbent resin composition (7) (195.8 g) was obtained in the same manner as in Example 10, except that in Example 10, the amount of benzimidazole added to 100 parts by mass of the water-absorbent resin particles was changed to 1.10 parts by mass. The water-absorbent resin composition (7) had a median particle size of 177 μm. The water-absorbent resin composition (7) had a 30-second swelling height of 8.2 mm.

Example 13

A water-absorbent resin composition (8) (192.1 g) was obtained in the same manner as in Example 9, except that in Example 9, the amount of water removed from the system was changed to 243.6 g, the amount of the 32 mass% EDTMP·5Na aqueous solution added was changed to 0.70 g, and the amount of benzimidazole added to 100 parts by mass of the water-absorbent resin particles was changed to 0.76 parts by mass. The water-absorbent resin composition (8) had a median particle size of 178 μm. The water-absorbent resin composition (8) had a 30-second swelling height of 9.2 mm.

Example 14

A water-absorbent resin composition (9) (193.3 g) was obtained in the same manner as in Example 13, except that in Example 13, the amount of water removed from the system was changed to 244.2 g, and the amount of the 32 mass% EDTMP·5Na aqueous solution added was changed to 1.39 g. The water-absorbent resin composition (9) had a median particle size of 180 μm. The water-absorbent resin composition (9) had a 30-second swelling height of 9.0 mm.

Example 15

A water-absorbent resin composition (10) (195.1 g) was obtained in the same manner as in Example 13, except that in Example 13, the amount of water removed from the system was changed to 244.6 g, and the amount of the 32 mass% EDTMP·5Na aqueous solution added was changed to 2.09 g. The water-absorbent resin composition (10) had a median particle size of 181 μm. The water-absorbent resin composition (10) had a 30-second swelling height of 8.8 mm.

Example 16

A water-absorbent resin composition (11) (195.1 g) was obtained in the same manner as in Example 15, except that in Example 15, the amount of benzimidazole added to 100 parts by mass of the water-absorbent resin particles was changed to 1.10 parts by mass. The water-absorbent resin composition (11) had a median particle size of 175 μm. The water-absorbent resin composition (11) had a 30-second swelling height of 8.6 mm.

Example 17

Water-absorbent resin particles (2) (192.6 g) were obtained in the same manner as in Example 6, except that in Example 6, the amount of water removed from the system was changed to 245.7 g, and the metal chelating agent was changed from the EDTMP·5Na aqueous solution to 3.91 g of a 35 mass% ethylenediamine-N,N'-disuccinic acid (abbreviated below as "EDDS·3Na") aqueous solution. After 0.1 parts by mass of the amorphous silica mentioned above was mixed with 100 parts by mass of the water-absorbent resin particles (2), 0.76 parts by mass of benzimidazole was mixed with 100 parts by mass of the water-absorbent resin particles (2), thereby obtaining a water-absorbent resin composition (12). The water-absorbent resin composition (12) had a median particle size of 171 μm. The water-absorbent resin composition (12) had a 30-second swelling height of 8.5 mm.

Example 18

Water-absorbent resin particles (3) (187.8 g) were obtained in the same manner as in Example 6, except that in

Example 6, the amount of water removed from the system was changed to 245.7 g, and the metal chelating agent was changed from the EDTMP·5Na aqueous solution to 0.91 g of a 31 mass% diethylene triamine penta methylene phosphonic acid (abbreviated below as "DTPMP·7Na") aqueous solution. After 0.1 parts by mass of the amorphous silica mentioned above was mixed with 100 parts by mass of the water-absorbent resin particles (3), 0.76 parts by mass of benzimidazole was mixed with 100 parts by mass of the water-absorbent resin particles (3), thereby obtaining a water-absorbent resin composition (13). The water-absorbent resin composition (13) had a median particle size of 173 μm. The water-absorbent resin composition (13) had a 30-second swelling height of 9.2 mm.

Example 19

A water-absorbent resin composition (14) was obtained in the same manner as in Example 15, except that in Example 10, 1.00 parts by mass of 2-aminobenzimidazole was added to 100 parts by mass of the water-absorbent resin particles instead of benzimidazole. The water-absorbent resin composition (14) had a median particle size of 168 μm. The water-absorbent resin composition (14) had a 30-second swelling height of 8.7 mm.

Example 20

A water-absorbent resin composition (15) was obtained in the same manner as in Example 15, except that in Example 15, 1.00 parts by mass of 1-methylbenzimidazole was added to 100 parts by mass of the water-absorbent resin particles instead of benzimidazole. The water-absorbent resin composition (15) had a median particle size of 166 μm. The water-absorbent resin composition (15) had a 30-second swelling height of 8.9 mm.

Example 21

A slurry containing a hydrogel polymer was prepared in the same manner as in Example 6. The flask containing the slurry containing a hydrogel polymer was immersed in an oil bath at 125°C, and 243.2 g of water was removed from the system while refluxing n-heptane by azeotropic distillation of n-heptane and water. Thereafter, 7.15 g (0.821 mmol) of a 2 mass% aqueous ethylene glycol diglycidyl ether solution was added as a post-crosslinking agent to the flask, and the flask was maintained at 83°C for 2 hours. Subsequently, n-heptane was evaporated by heating in an oil bath at 125°C to dry the product, and further, the product was passed through a sieve with a mesh size of 850 μm to obtain water-absorbent resin particles (4). After 0.1 parts by mass of amorphous silica (Oriental Silicas Corporation, Toxil NP-S) was mixed with 100 parts by mass of the water-absorbent resin particles (4), 0.26 parts by mass of ethylenediamine tetra methylene phosphonic acid (abbreviated below as "EDTMP·8H") was added in the form of powder directly as a metal chelating agent and mixed well with 100 parts by mass of the water-absorbent resin particles (4). Further, 0.76 parts by mass of benzimidazole was mixed with 100 parts by mass of the water-absorbent resin particles (4) to thereby obtain 188.9 g of a water-absorbent resin composition (16). The water-absorbent resin composition (16) had a median particle size of 166 μm. The water-absorbent resin composition (16) had a 30-second swelling height of 8.8 mm.

Example 22

A 2 L round-bottom cylindrical separable flask with an inner diameter of 11 cm equipped with a reflux condenser, a dropping funnel, a nitrogen gas inlet tube, and stirring blades (surface-coated with a fluorine resin) including two sets of four inclined paddle blades with a blade diameter of 5 cm as a stirrer was prepared. 472 g of n-heptane as a hydrocarbon dispersion medium and 1.10 g of sorbitan monolaurate (HLB 8.6, produced by NOF Corporation, product name: Nonion LP-20R) as a surfactant were added to the flask. The temperature of the resulting mixture was raised to 46°C. Meanwhile, 92.0 g (1.03 mol) of an 80.5 mass% aqueous acrylic acid solution was placed as a water-soluble ethylenically unsaturated monomer in a beaker with an inner volume of 300 mL, and while cooling with ice water, 102.8 g of a 30 mass% aqueous sodium hydroxide solution was added dropwise to prepare a 75 mol% neutralized product of acrylic acid. Further, 44.6 g of water and 0.1012 g (0.374 mmol) of potassium persulfate as a water-soluble radical polymerization agent were added and dissolved to prepare an aqueous solution. The aqueous solution was added to the separable flask, and the flask was purged with nitrogen for 30 minutes with stirring at a stirrer rotation speed of 700 rpm. Thereafter, the flask was immersed in a water bath at 70°C to raise the temperature, and polymerization was allowed to proceed for 60 minutes, thereby obtaining a hydrogel polymer 2.

After polymerization, 0.41 g (0.047 mmol) of a 2 mass% aqueous ethylene glycol diglycidyl ether solution was added to the flask. Subsequently, the flask was immersed in an oil bath at 125°C, and 104.0 g of water was removed from the system while refluxing n-heptane by azeotropic distillation of n-heptane and water. Then, 1.0 g of a 32 mass% EDTMP·5Na aqueous solution was added as a metal chelating agent. Thereafter, 2.76 g (0.317 mmol) of a 2 mass% aqueous ethylene glycol diglycidyl ether solution as a post-crosslinking agent was added to the flask, and the flask was

maintained at 83°C for 2 hours. Thereafter, n-heptane was evaporated by heating in an oil bath at 125°C to dry the product to obtain 95.6 g of water-absorbent resin particles. The water-absorbent resin particles were passed through a sieve with a mesh size of 850 μm to obtain 68.1 g of water-absorbent resin particles (5). Then, 0.76 parts by mass of benzimidazole was mixed with 100 parts by mass of the water-absorbent resin particles (5) to obtain a water-absorbent resin composition (17). The water-absorbent resin composition (17) had a median particle size of 166 μm. The water-absorbent resin composition had a 30-second swelling height of 15.1 mm.

Comparative Example 1

A water-absorbent resin composition (a1) was obtained in the same manner as in Example 1, except that in Example 1, benzimidazole was not added. The water-absorbent resin composition (a1) had a median particle size of 175 μm. The water-absorbent resin composition (a1) had a 30-second swelling height of 8.9 mm.

Evaluation method

Median Particle Size of Water-absorbent Resin Particles

5 g of water-absorbent resin particles were sieved using a sonic vibration sieving measurement apparatus (Robot Shifter RPS-01, produced by Seishin Enterprise Co., Ltd.), JIS standard sieves with mesh sizes of 850 μm, 500 μm, 250 μm, 180 μm, 150 μm, 106 μm, and 75 μm, and a receiving tray. The mass of the particles remaining on each sieve was calculated as a mass percentage relative to the total amount. The mass percentages of the particles remaining on the sieves were integrated in descending order of the particle diameters, and the relationship between the mesh size of the sieve and the integrated value of the mass percentages of the particles remaining on the sieve was plotted on logarithmic probability paper. The plotted points on the probability paper were connected by straight lines; thus, the particle diameter corresponding to 50 mass% of the integrated mass percentage was determined and used as the median particle size of the water-absorbent resin particles.

30-Second Swelling Height of Water-absorbent Resin Composition

The swelling height of a water-absorbent resin composition was measured with the swelling height measurement apparatus X shown in Fig. 1. The swelling height measurement apparatus X shown in Fig. 1 includes a movement distance measurement apparatus 1, a concave circular cup 2 (height: 45 mm, outer diameter: 90 mm, depth of the concave portion: 40 mm, inner diameter of the concave portion: 80 mm), a plastic convex circular cylinder 3 (outside diameter: 79 mm; 60 through-holes 7 with a diameter of 2 mm are uniformly formed on the surface in contact with the water-absorbent resin composition), and a nonwoven fabric 4 (liquid-permeable nonwoven fabric with a basis weight of 11 g/m$^2$). The swelling height measurement apparatus X can measure a change in movement distance of the convex circular cylinder 3 in 0.01 mm increments using a laser beam 6. The concave circular cup 2 can uniformly disperse a predetermined amount of a water-absorbent resin composition. The convex circular cylinder 3 can uniformly apply a load of 90 g to a water-absorbent resin composition 5, which is a sample.

First, 0.2 g of a sample (water-absorbent resin composition 5) was uniformly sprayed over the concave circular cup 2, and the nonwoven fabric 4 was spread thereon. The convex circular cylinder 3 was gently placed on the nonwoven fabric 4 and arranged so that the laser beam 6 of the sensor of the movement distance measurement apparatus 1 could illuminate the center portion of the cylinder 3. Ion-exchanged water previously adjusted to 20°C was poured into the concave circular cup 2 through the through-holes 7 of the convex circular cylinder 3 to cause the water-absorbent resin composition 5 to swell. The time when the laser detects that the convex circular cylinder 3 is pushed up due to swelling of the water-absorbent resin composition 5 was defined as the start of water absorption (0 seconds) (automatic measurement starts when the convex circular cylinder 3 is displaced by 0.5 mm), and the movement degree of the convex circular cylinder 3 pushed up due to swelling of the water-absorbent resin composition 5 (the amount of change in the position of the convex circular cylinder 3 in the direction perpendicular to the bottom surface of the concave portion of the concave circular cup 2) was measured. The level of ion-exchanged water was checked every 3 seconds from the start of pouring ion-exchanged water, and ion-exchanged water continued to be intermittently poured so as to maintain the water surface near the height of the flat surface of the flat portion of the convex circular cylinder 3. The movement degree of the convex circular cylinder 3 thirty seconds after the moment of the start of water absorption by the water-absorbent resin composition 5 (more precisely, the moment when the cylinder 3 was pushed up by 0.5 mm upon absorption of a trace of ion-exchanged water by the water-absorbent resin composition) (including the height to which the cylinder 3 was pushed up (0.5 mm) at the moment of the start of water absorption) was recorded as the "30-second swelling height."

Measurement of Gel Viscosity Retention

The gel viscosity of each water-absorbent resin composition was determined by adjusting the temperature of the swollen gel to 25±0.5°C, and making measurement using a Vismetron viscometer (VDH2-type, produced by Shibaura System Co. Ltd., rotor No. 5, rotation speed: 10 rpm). In this gel viscosity measurement, the gel was placed to a height of 65 mm in a 200 mL glass beaker with an inner diameter of 64 mm φ.

100 g of ion-exchanged water was added to a 200 mL beaker, and the mixture was stirred at 600 rpm with a magnetic stirrer bar (cylindrical, diameter 8 mm × length 30 mm, without a ring). After 2.0 g of the water-absorbent resin composition was added to the vortex generated by the stirring, stirring was continued until the magnetic stirrer stopped due to the produced gel. This operation was performed twice in total to obtain a swollen gel corresponding to 4.0 g of the water-absorbent resin composition before swelling. Thereafter, the gel viscosity of the thus-obtained swollen gel was immediately measured and used as the "initial gel viscosity." Then, 200 g of the swollen gel after measurement was immediately placed in a 250 mL heat-resistant glass bottle with a bottom outer diameter of 70 mm φ and a mouth outer diameter of 42 mm φ, and allowed to stand in a hot-air dryer (produced by ADVANTEC, FV-320) at 90±2°C to measure the viscosities of the swollen gel after 4 days and 9 days. The gel viscosity retention S was calculated according to the following formula (I):

$$\text{Gel viscosity retention } S = (B/A) \times 100 \quad (I)$$

In formula (I), A represents the gel viscosity (mPa·s) after 4 days in an environment of 90±2°C, and B represents the gel viscosity (mPa·s) after 9 days in an environment of 90±2°C. The gel viscosity A after 4 days in an environment of 90±2°C and the gel viscosity retention S were used as indicators of heat resistance.

Table 1

| Example and Comparative Example | Gel viscosity after 4 days (mPa·s) | Gel viscosity after 9 days (mPa·s) | Gel viscosity retention (%) |
|---|---|---|---|
| Example 1 | 37,640 | 16,800 | 45 |
| Example 2 | 32,100 | 18,240 | 57 |
| Example 3 | 39,900 | 24,160 | 61 |
| Example 4 | 31,400 | 12,960 | 41 |
| Example 5 | 28,900 | 22,000 | 76 |
| Example 6 | 28,080 | 14,720 | 52 |
| Example 7 | 32,080 | 19,240 | 60 |
| Example 8 | 36,480 | 26,800 | 73 |
| Example 9 | 24,880 | 20,080 | 81 |
| Example 10 | 26,880 | 22,240 | 83 |
| Example 11 | 25,000 | 19,720 | 79 |
| Example 12 | 31,120 | 16,640 | 53 |
| Example 13 | 37,160 | 28,480 | 77 |
| Example 14 | 38,000 | 25,640 | 67 |
| Example 15 | 32,320 | 22,000 | 68 |
| Example 16 | 27,280 | 24,360 | 89 |
| Example 17 | 39,040 | 21,000 | 54 |
| Example 18 | 37,440 | 26,720 | 71 |
| Example 19 | 29,840 | 20,360 | 68 |
| Example 20 | 35,040 | 25,760 | 74 |
| Example 21 | 36,160 | 26,080 | 72 |
| Example 22 | 60,700 | 41,100 | 68 |

(continued)

| Example and Comparative Example | Gel viscosity after 4 days (mPa·s) | Gel viscosity after 9 days (mPa·s) | Gel viscosity retention (%) |
|---|---|---|---|
| Comparative Example 1 | 80 | 80 | 100 |

Table 1 shows the evaluation results of the water-absorbent resin compositions obtained in the Examples and Comparative Examples. The results confirmed that the water-absorbent resin compositions obtained in the Examples had high gel viscosities after 4 days under heating conditions at 90°C and also had high gel viscosity retention values. These results demonstrate that the water-absorbent resin compositions obtained in the Examples had excellent heat resistance in a swollen state, and support the fact that the compositions can maintain the gel state for a long period of time even in an environment in which power cables are used or in a similar environment.

The above results revealed that the water-absorbent resin compositions obtained in the Examples have excellent heat resistance in a swollen state and can be suitably used as water-blocking materials.

**Claims**

**1.** A water-absorbent resin composition comprising:

water-absorbent resin particles; and
a benzimidazole compound represented by the following formula (1):

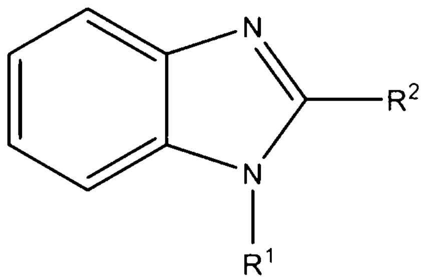

(1)

wherein in formula (1), $R^1$ represents a methyl group or a hydrogen atom, and $R^2$ represents a methyl group, an amino group, a methylthio group, a phenyl group, or a hydrogen atom.

**2.** The water-absorbent resin composition according to claim 1, comprising a metal chelating agent.

**3.** The water-absorbent resin composition according to claim 1, wherein the content of the benzimidazole compound is 0.01 parts by mass or more and 5 parts by mass or less per 100 parts by mass of the water-absorbent resin particles.

**4.** The water-absorbent resin composition according to claim 2, wherein the content of the metal chelating agent is 0.001 parts by mass or more and 2 parts by mass or less per 100 parts by mass of the water-absorbent resin particles.

**5.** The water-absorbent resin composition according to claim 1, having a 30-second swelling height of 6.0 mm or more.

**6.** A water-blocking material comprising the water-absorbent resin composition of any one of claims 1 to 5.

**7.** A cable comprising the water-blocking material of claim 6.

Fig. 1

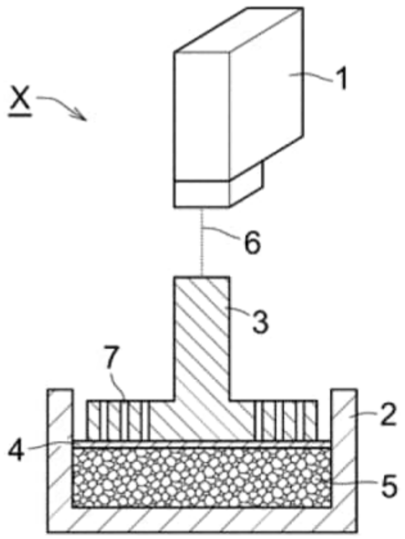

## INTERNATIONAL SEARCH REPORT

International application No.
**PCT/JP2023/046537**

**A. CLASSIFICATION OF SUBJECT MATTER**

***C08L 101/14***(2006.01)i; ***C08K 5/3447***(2006.01)i; ***C08K 5/5399***(2006.01)i; ***H01B 7/288***(2006.01)i
FI: C08L101/14; C08K5/3447; C08K5/5399; H01B7/288

According to International Patent Classification (IPC) or to both national classification and IPC

**B. FIELDS SEARCHED**

Minimum documentation searched (classification system followed by classification symbols)

C08L101/14; C08K5/3447; C08K5/5399; H01B7/288

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2021/075459 A1 (SUMITOMO SEIKA CHEMICALS CO., LTD.) 22 April 2021 (2021-04-22)<br>claims, examples | 1, 3, 5<br>2, 4, 6-7 |
| A | WO 2020/203722 A1 (SUMITOMO SEIKA CHEMICALS CO., LTD.) 08 October 2020 (2020-10-08)<br>entire text | 1-7 |
| A | Microfilm of the specification and drawings annexed to the request of Japanese Utility Model Application No. 133041/1984 (Laid-open No. 48610/1986) (JAPAN VILENE COMPANY, LTD.) 01 April 1986 (1986-04-01), entire text | 1-7 |
| A | JP 2004-210924 A (SUMITOMO SEIKA CHEMICALS CO., LTD.) 29 July 2004 (2004-07-29)<br>entire text | 1-7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 February 2024** | **12 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/046537**

| Patent document cited in search report | Publication date (day/month/year) | Patent family member(s) | Publication date (day/month/year) |
|---|---|---|---|
| WO 2021/075459 A1 | 22 April 2021 | EP 4042992 A1<br>claims, examples<br>CN 114555137 A<br>KR 10-2022-0066345 A | |
| WO 2020/203722 A1 | 08 October 2020 | US 2022/0176347 A1<br>entire text<br>EP 3950729 A1<br>CN 113631589 A<br>KR 10-2021-0148125 A | |
| JP 61-48610 U1 | 01 April 1986 | (Family: none) | |
| JP 2004-210924 A | 29 July 2004 | US 2006/0074160 A1<br>entire text<br>WO 2004/061010 A1<br>EP 1577349 A1<br>CN 1732233 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014147281 A